(19) Europäisches Patentamt
European Patent Office
Office européen des brevets

(11) **EP 2 233 396 B1**

(12) **FASCICULE DE BREVET EUROPEEN**

(45) Date de publication et mention
de la délivrance du brevet:
**16.05.2018 Bulletin 2018/20**

(51) Int Cl.:
***B64C 27/26*** *(2006.01)*

(21) Numéro de dépôt: **10001831.6**

(22) Date de dépôt: **23.02.2010**

(54) **Procédé et dispositif pour optimiser le fonctionnement d'hélices propulsives disposées de part et d'autre du fuselage d'un giravion**

Verfahren und Vorrichtung zur Leistungsoptimierung von Propellern, die an beiden Seiten vom Rumpf eines Drehflüglers angeordnet sind

Method and device for optimising the performance of propellers disposed on each side of the fuselage of a rotorcraft

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.03.2009 FR 0901497**

(43) Date de publication de la demande:
**29.09.2010 Bulletin 2010/39**

(73) Titulaire: **Airbus Helicopters**
**13725 Marignane Cedex (FR)**

(72) Inventeurs:
• **Queiras, Nicolas**
**13090 Aix en Provence (FR)**
• **Salesse-Lavergne, Marc**
**13011 Marseille (FR)**
• **Eglin, Paul**
**13100 Aix en Provence (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A2- 0 867 364       FR-A1- 2 689 854**
**FR-A1- 2 916 418       US-A- 4 935 682**
**US-A1- 2002 011 539**

## Description

La présente invention concerne un procédé et un dispositif pour optimiser le fonctionnement d'hélices propulsives gauche et droite disposées de part et d'autre du fuselage d'un giravion.

Ainsi, l'invention se rapporte à un giravion équipé d'hélices propulsives disposées de part et d'autre du fuselage du giravion, le rotor principal de sustentation du giravion étant mis en rotation par une installation motrice durant au moins une partie du vol.

Par exemple, le giravion peut être un hélicoptère hybride.

Un hélicoptère hybride est relatif à un concept avancé d'aéronef à décollage et à atterrissage verticaux, désigné « VTOL Aircraft » ou « Vertical Take-Off and Landing Aircraft » en langue anglaise.

Ce concept avancé d'hélicoptère hybride, décrit dans le document FR2916418 allie à un coût raisonnable l'efficacité du vol vertical de l'hélicoptère conventionnel aux performances à grande vitesse de déplacement permises par l'utilisation d'hélices propulsives et l'installation de turbomoteurs modernes.

Ainsi, un hélicoptère hybride est ni un hélicoptère, ni un autogire, ni un girodyne. De même, l'hélicoptère hybride n'est ni un combiné, ni un convertible.

En effet, un hélicoptère hybride comprend un fuselage et un rotor principal de sustentation destiné à entraîner en rotation des pales grâce à au moins un turbomoteur.

De plus, l'hélicoptère hybride est pourvu d'une aile composée de deux demi-ailes, deux hélices propulsives gauche et droite étant placées de part et d'autre du fuselage, sur les demi-ailes.

En outre, l'hélicoptère hybride est équipé d'une chaîne cinématique intégrée, qui, outre le ou les turbomoteurs, le rotor principal et les deux hélices gauche et droite, comprend un système mécanique d'interconnexion entre ces éléments.

Par commodité et dans la suite du texte, on considère que la gauche d'un aéronef se trouve à la gauche d'un individu se trouvant dans ledit aéronef et tournant le dos à l'arrière de l'aéronef de manière à regarder l'avant de l'aéronef. De fait, on considère que la droite d'un aéronef se trouve à la droite d'un individu se trouvant dans ledit aéronef et tournant le dos à l'arrière de l'aéronef de manière à regarder l'avant de l'aéronef.

Les termes gauche et droite utilisés ci-dessous sont alors respectivement assimilables aux termes « bâbord » et « tribord» utilisés pour un navire.

Avec cette configuration, les vitesses de rotation des sorties du ou des turbomoteurs, des hélices gauche et droite, du rotor principal et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Par conséquent et de façon avantageuse, le rotor principal demeure toujours entraîné en rotation par le (ou les) turbomoteur(s), et développe toujours une portance quelle que soit la configuration de l'hélicoptère hybride, aussi bien en vol d'avancement qu'en vol stationnaire.

Ainsi, lors des phases de vol en configuration normale, c'est à dire à l'exclusion de la configuration de vol en autorotation soit dans un but d'entraînement à la panne moteur soit suite à une panne moteur réelle, ledit au moins un turbomoteur est toujours en liaison mécanique avec le rotor. Ce rotor est donc toujours entraîné en rotation par ledit au moins un turbomoteur quelle que soit la phase de vol en configuration normale, la configuration de vol en autorotation par exemple ne faisant pas partie de ces phases de vol en configuration normale.

Plus précisément, le rotor principal est destiné à assurer la totalité de la portance de l'hélicoptère hybride pendant les phases de décollage, d'atterrissage et de vol vertical puis partiellement pendant le vol de croisière, l'aile contribuant alors pour partie à supporter ledit hélicoptère hybride.

Ainsi, le rotor principal exerce la plus grande part de la sustentation de l'hélicoptère hybride en vol de croisière avec éventuellement une faible contribution aux forces propulsives ou de traction et toujours avec une traînée minimale.

A l'instar d'un hélicoptère, le pilote dispose alors d'un premier et d'un deuxième organes de commande, un levier de pas collectif et un manche de pas cyclique par exemple, pour contrôler respectivement le pas collectif et le pas cyclique des pales du rotor principal.

Par ailleurs, en modifiant collectivement et d'une même quantité le pas des pales des hélices gauche et droite de l'hélicoptère hybride, il est en outre possible de contrôler la poussée générée par ces hélices gauche et droite.

Ainsi, le pilote dispose d'au moins un troisième organe de commande de la poussée, tel qu'un levier de commande, apte à modifier collectivement et d'une même quantité le pas des pales des hélices gauche et droite.

A contrario, les fonctions anticouple et de contrôle de direction sont réalisées par l'utilisation d'une poussée différentielle exercée par les hélices gauche et droite, par exemple via la mise en oeuvre d'un organe de commande de pas différentiel de type palonnier par le pilote.

Par suite, le troisième organe de commande permet de définir le pas moyen des pales des hélices gauche et droite, ce pas moyen correspondant à la demi-somme des premier et deuxième pas des pales des hélices gauche et droite.

A contrario, le palonnier permet d'éloigner du pas moyen le pas des pales des hélices gauche et droite de manière différentielle, le pas des pales d'une hélice étant augmenté d'une valeur différentielle de pas alors que le pas des pales de l'autre hélice est diminué de ladite valeur.

Pour réaliser la fonction anticouple sur un hélicoptère hybride, il convient donc d'obtenir une poussée différentielle, la valeur et/ou la direction de la poussée exercée par l'hélice gauche devant être différente de la valeur et/ou la direction de la poussée exercée par l'hélice droite. On en conclut donc que le premier pas des pales de l'hélice gauche est nécessairement différent du deuxième pas des pales de l'hélice droite pour stabiliser l'hélicoptère hybride en lacet.

Or, le rendement maximum d'une hélice ne peut être obtenu qu'avec une valeur donnée de pas des pales de cette hélice pour un facteur d'avancement λ donné, ce facteur d'avancement λ étant égal à:

$$\lambda = TAS/(\Omega \times R)$$

avec TAS la vitesse air vraie du giravion, Ω la vitesse de rotation des hélices et R le rayon des pales des hélices.

Les hélices gauche et droite étant identiques, une différence de pas entre lesdits premier et deuxième pas implique de fait qu'au moins une hélice ne fonctionne pas dans sa meilleure plage de rendement.

Cette différence se traduit aussi par une différence entre le premier couple généré par l'hélice gauche et le deuxième couple généré par l'hélice droite pouvant à l'extrême s'avérer problématique. En effet, si une hélice est proche de son couple maximal admissible, alors la marge de manoeuvre du pilote en lacet du côté de l'hélice la plus proche de sa limite devient par conséquent limitée.

On peut envisager d'équiper l'hélicoptère hybride de surfaces aérodynamiques engendrant une portance anticouple transversale, des dérives fixes sensiblement parallèles au plan de symétrie du fuselage et agencées à l'extrémité arrière du fuselage.

Ces surfaces aérodynamiques peuvent en outre être équipées de volets de dérive, des actionneurs électriques commandant les volets pour faire varier leurs angles de braquage par rapport à la dérive fixe à laquelle les volets sont fixés afin de stabiliser l'hélicoptère hybride.

Le document US4935682 présente un dispositif de commande pour éviter qu'un avion, muni de propulseurs disposés de part et d'autre de son fuselage, entame un mouvement en lacet lorsque la poussée générée par un propulseur baisse.

Ainsi, selon ce document US4935682, le dispositif de commande utilise un signal de poussée différentielle pour contrôler la position d'un gouvernail de direction.

Le document EP0742141 vise à obtenir le même résultat en contrôlant la position d'un gouvernail en fonction des accélérations de l'avion.

Les documents FR2689854 et FR2769285 présentent un hélicoptère muni d'une surface aérodynamique de direction exerçant une portance transversale, cette surface aérodynamique comportant un volet de dérive dont l'angle de braquage par rapport à la surface aérodynamique est ajustable.

Ainsi, selon le document FR2689854, on commande automatiquement l'angle de braquage du volet en fonction du pas collectif du rotor principal de sustentation de l'hélicoptère et de la vitesse d'avancement de cet hélicoptère.

Enfin, le document US6478262 présente un aéronef dont la gouverne de direction, conjuguée avec la commande de pas collectif a pour fonction la commande en lacet.

Le document EP0867364 présente un hélicoptère muni de dérives verticales, l'angle d'attaque des dérives variant pour commander le lacet de l'hélicoptère. L'efficacité du rotor arrière est prépondérante à basse vitesse alors que l'efficacité des dérives est prépondérante à haute vitesse pour contrecarrer le couple exercé par le rotor principal sur la cellule.

Ainsi, l'état de la technique ne fournit pas d'enseignements précis pour optimiser le fonctionnement des hélices gauche et droite d'un giravion ayant un rotor principal de sustentation entraîné par une installation motrice durant au moins une phase de vol. En effet, l'état de la technique n'indique pas comment permettre aux pales des hélices gauche et droite d'avoir un pas proche voire égal à la valeur donnée induisant un rendement maximal de chaque hélice.

Cet état de la technique se contente de présenter des moyens pour stabiliser un aéronef ou le commander en lacet. Par suite, les documents précités ne permettent pas de résoudre le problème posé.

La présente invention a alors pour objet de proposer un procédé et un dispositif permettant d'optimiser le fonctionnement des hélices gauche et droite d'un giravion ayant un rotor principal de sustentation entraîné par une installation motrice durant au moins une phase de vol, voire en permanence dans le cadre d'un hélicoptère hybride.

Ainsi, l'invention se rapporte à un procédé pour optimiser le fonctionnement d'une hélice gauche et d'une hélice droite disposées de part et d'autre du fuselage d'un giravion et apte à générer un flux d'air propulsif, ce giravion comportant un rotor principal de sustentation ainsi qu'une installation motrice apte à mettre en rotation les hélices gauche et droite ainsi que le rotor principal, le giravion comportant de plus une surface aérodynamique gauche et une surface aérodynamique droite exerçant une portance transversale agencées respectivement dans le prolongement desdites hélices gauche et droite sur un empennage au voisinage d'une extrémité arrière dudit fuselage.

Ce procédé est notamment remarquable en ce que, les surfaces aérodynamiques gauche et droite comportant respectivement un volet gauche et un volet droit aptes à être braqués pour présenter un angle de braquage avec la surface aérodynamique associée, la stabilisation en lacet du giravion étant assurée au travers d'un premier et d'un deuxième pas respectivement des hélices gauche et droite, on active la régulation de l'angle de braquage des volets gauche et droit uniquement durant des phases de vol prédéterminées pour minimiser un pas différentiel des hélices gauche et droite afin d'optimiser le fonctionnement des hélices gauche et droite, les phases de vol prédéterminées incluant les phases de vol à basse vitesse réalisées à une vitesse air indiquée du giravion inférieure à un seuil prédéterminé et des phases de vol stabilisées en lacet à haute vitesse réalisées à une vitesse air indiquée du giravion supérieure audit seuil prédéterminé, ledit pas différentiel étant égal la demie-différence d'un premier pas des pales de l'hélice gauche et d'un deuxième pas des pales de l'hélice droite.

On rappelle que, par commodité et dans la suite du texte, on considère que la gauche d'un aéronef à se trouve à la gauche d'un individu se trouvant dans ledit aéronef et tournant le dos à l'arrière de l'aéronef de manière à regarder l'avant de l'aéronef. De fait, on considère que la droite d'un aéronef à se trouve à la droite d'un individu se trouvant dans ledit aéronef et tournant le dos à l'arrière de l'aéronef de manière à regarder l'avant de l'aéronef.

Ainsi, l'hélice gauche, la surface aérodynamique gauche et le volet gauche du giravion se trouvent à la gauche d'un individu se trouvant dans le giravion et tournant le dos à l'arrière de ce giravion de manière à regarder l'avant du giravion. Au contraire, l'hélice droite, la surface aérodynamique droite et le volet droit du giravion se trouvent à la droite d'un individu se trouvant dans le giravion et tournant le dos à l'arrière de ce giravion de manière à regarder l'avant du giravion.

On rappelle de plus que la vitesse air indiquée correspond à la vitesse air indiquée par un instrument anémo-barométrique du giravion, corrigée des effets de la compressibilité de l'air en conditions atmosphériques standard au niveau de la mer, et non pas corrigée des erreurs du circuit anémo-barométrique. On se rapportera à la littérature existante pour obtenir plus d'informations sur les instruments de mesure de cette vitesse air indiquée.

Par suite, selon l'invention on utilise des volets gauche et droit dont le bord d'attaque est respectivement fixé aux surfaces aérodynamiques gauche et droite, ces surfaces aérodynamiques gauche et droite étant sensiblement verticales à savoir sensiblement parallèles au plan de symétrie longitudinal du fuselage du giravion. Les volets gauche et droit n'ont alors pas pour but de stabiliser le giravion contrairement au document EP0867364, avantageusement un hélicoptère hybride, mais visent à un résoudre un problème défini de manière innovante pour équilibrer les hélices gauche et droite afin d'optimiser leur point de fonctionnement en vol stabilisé.

Pour une large gamme de vitesses d'avancement, la régulation de l'angle de braquage des volets gauche et droit permet d'obtenir le même pas sur chaque hélice et donc un comportement optimal au niveau de leur point de fonctionnement. En effet, le premier pas des pales de l'hélice gauche est proche voire égal à un pas donné pour laquelle l'hélice gauche à un rendement maximal, le deuxième pas des pales de l'hélice droite étant proche voire égal à un pas donné pour laquelle l'hélice droite à un rendement maximal.

On peut alors utiliser une hélice gauche identique à l'hélice droite sans contre-indication. Les points de fonctionnement des hélices gauche et droite, correspondant de fait à la poussée générée par l'hélice sont de plus équilibrés ce qui permet notamment d'optimiser le dimensionnement de la structure de l'aéronef mais aussi de la chaîne de transmission reliant l'installation motrice à chaque hélice.

Ainsi, durant des phases de vol prédéterminées, on braque éventuellement au moins un volet afin que ce volet participe à l'action visant à contrecarrer le couple généré par le rotor principal. Ledit volet reprenant une partie du couple en vol stabilisé, il devient possible de réduire voire de rendre nul le pas différentiel des pales des hélices gauche et droite ce qui permet d'optimiser leur fonctionnement.

Les volets gauche et droit équilibrent donc les hélices gauche et droite durant une phase de vol prédéterminée.

Le premier couple généré par l'hélice gauche et le deuxième couple généré par l'hélice droite sont alors symétrisés de part la gestion de l'angle de braquage des volets gauche et droit. Le couple généré par l'hélice la plus chargée est alors éloigné de son couple maximal ce qui permet d'augmenter le marge de manoeuvrabilité en lacet du giravion et la durée de vie des chaînes de transmission liant les hélices gauche et droite à une installation motrice.

La régulation de l'angle de braquage des volets gauche et droit représente uniquement une boucle de régulation secondaire. En effet, les moyens d'ajustement, agissant sur le pas des pales des hélices gauche et droite, assurent en priorité la stabilisation en lacet du giravion au travers d'une boucle de régulation principale alors que la régulation de l'angle de braquage des volets gauche et droit vise à équilibrer à plus long terme le couple au niveau de chaque hélice.

Il est à noter que l'on entend par l'expression « braquer le volet » toute action visant à mettre en rotation le volet autour d'un axe de fixation du bord d'attaque du volet à la surface aérodynamique associée, la rotation du volet consistant en un déplacement du bord de fuite de ce volet dans le sens de rotation dextrorsum ou senestrorsum.

De plus, le sens de rotation dextrorsum ou senestrorsum n'a une signification qu'à partir du moment où l'on précise de quel endroit on observe le giravion. En l'occurrence, on prend comme convention dans la présente description que l'on observe le giravion vu de dessus, le rotor principal du giravion se trouvant sur le dessus du giravion alors que son train d'atterrissage se trouve au contraire dessous ce giravion.

Le procédé possède en outre une ou plusieurs des caractéristiques additionnelles suivantes.

Ainsi, lorsqu'une vitesse air indiquée du giravion est inférieure à un seuil prédéterminé, de l'ordre de 50 noeuds soit 25.7 mètres par seconde par exemple, le rotor principal étant entraîné en rotation par l'installation motrice selon un premier sens de rotation et générant un couple en lacet sur le fuselage contrecarré notamment par une hélice propulsant un flux d'air vers l'arrière du giravion, on régule l'angle de braquage du volet recevant ledit flux d'air dirigé vers l'arrière du giravion en faisant effectuer au volet une rotation autour de son axe de fixation selon un deuxième sens opposé audit premier sens pour lui faire atteindre un angle de braquage maximal par rapport à la surface aérodynamique associée.

Ainsi, on braque à fond le volet se situant dans ledit flux d'air afin que la pression exercée par le flux d'air sur le volet soit maximale.

De cette manière, le volet se situant dans ledit flux d'air permet d'équilibrer les hélices gauche et droite en participant à l'effort anticouple à l'égard du couple généré par le rotor principal. Le pas différentiel des hélices gauche et droite est alors réduit.

De plus, en vol stationnaire, réduire ledit pas différentiel des hélices gauche et droite induit une diminution non négligeable de la puissance consommée au global par ces hélices gauche et droite.

En vol d'avancement, le confort de pilotage est optimisé dans la mesure où l'organe de commande de pas différentiel est centré dans la plupart des phases de vol.

En outre, sur un hélicoptère hybride, le vol en stationnaire peut être réalisé soit en réglant le pas des hélices afin que ces hélices génèrent des poussées de même valeur mais dans des directions opposées, soit en réglant le pas des hélices afin qu'une seule hélice exerce une poussée au détriment d'une assiette à cabrer.

Dans ce dernier cas, la réduction de la puissance consommée a notamment pour conséquence une diminution de la poussée résultante et donc de l'assiette à cabrer en stationnaire nécessaire pour équilibrer la composante de force longitudinale résultant des poussées des hélices lorsqu'une seule hélice réalise le stationnaire.

Par conséquent, lorsqu'une vitesse air indiquée du giravion est inférieure à un seuil prédéterminé, de l'ordre de 50 noeuds soit 25.7 mètres par seconde par exemple, le rotor principal étant entraîné en rotation par l'installation motrice selon un sens dextrorsum vu de dessus, on régule l'angle de braquage du volet gauche en faisant effectuer à ce volet gauche une rotation selon un sens senestrorsum vu de dessus pour lui faire atteindre un angle de braquage maximal par rapport à la surface aérodynamique gauche.

A contrario, lorsque la vitesse air indiquée du giravion est inférieure audit seuil prédéterminé, le rotor principal étant entraîné en rotation par l'installation motrice selon un sens senestrorsum vu de dessus, on régule l'angle de braquage du volet droit en lui faisant effectuer à ce volet droit une rotation selon un sens dextrorsum vu de dessus pour lui faire atteindre un angle de braquage maximal par rapport à la surface aérodynamique droite.

Par ailleurs, lorsque la vitesse air indiquée du giravion est supérieure audit seuil prédéterminé, on active la régulation de l'angle de braquage des volets gauche et droit si les conditions suivantes de vol stabilisé en lacet sont remplies :

- |Ny|<0.075 fois l'accélération de la pesanteur,

- |Phi| < 5 degrés,

- |P|< 10 degrés par seconde,

  - le pilote n'exerce pas d'effort sur un organe de commande de pas différentiel, tel qu'un palonnier, apte à ordonner une variation différentielle des premier et deuxième pas des pales des hélices gauche et droite,

où « |Ny| » représente la valeur absolue du facteur de charge du giravion selon une direction transversale dans le référentiel du giravion, « |Phi| » représente la valeur absolue de l'angle de roulis du giravion, « |P| » représente la valeur absolue de la vitesse angulaire de roulis du giravion.

Il est à noter qu'en dehors des conditions précitées, on maintient en position les volets gauche et droit afin que leurs angles de braquage ne soient pas modifiés.

Selon une première variante préférée, la régulation de l'angle de braquage des volets gauche et droit étant activée : on mesure en temps réel d'une part un premier couple généré par l'hélice gauche en pourcent du couple maximale apte à être généré par cette hélice gauche et, d'autre part, un deuxième couple généré par l'hélice droite en pourcent du couple maximal apte à être généré par cet hélice droite, puis on détermine en temps réel une première différence du deuxième couple moins le premier couple et :

- on ordonne le braquage des volets gauche et droit en leur faisant effectuer une rotation selon le sens dextrorsum, lorsque ladite première différence est supérieure à +2.5 pourcents,

- on ordonne le braquage desdits volets gauche et droit en leur faisant effectuer une rotation selon le sens senestrorsum lorsque ladite première différence est inférieure à -2.5 pourcents,

- on maintient en position lesdits volets gauche et droit lorsque ladite première différence est comprise entre -2.5 pourcents et +2.5 pourcents pour éviter des oscillations entretenues autour de l'objectif.

Ainsi, si le rotor principal est entraîné en rotation par ladite installation motrice selon un sens dextrorsum vu de dessus et si la régulation de l'angle de braquage des volets gauche et droit est activée :

- on ordonne le braquage des volets gauche et droit en leur faisant effectuer une rotation selon le sens dextrorsum autour de leur axe de fixation à la surface aérodynamique associée lorsque la première différence est supérieure à +2.5 pourcents,

- on ordonne le braquage desdits volets gauche et droit en leur faisant effectuer une rotation selon le sens senestrorsum autour de leurs axes de fixation à la surface aérodynamique associée lorsque la première différence est inférieure à -2.5 pourcents,

- on maintient en position lesdits volets gauche et droit lorsque la première différence est comprise entre -2.5 pourcents et +2.5 pourcents pour éviter des oscillations entretenues autour de l'objectif.

A contrario, si le rotor principal est entraîné en rotation par ladite installation motrice selon un sens senestrorsum vu de dessus et si la régulation de l'angle de braquage des volets gauche et droit est activée :

- on ordonne le braquage des volets gauche et droit en leur faisant effectuer une rotation selon le sens dextrorsum autour de leurs axes de fixation à la surface aérodynamique associée lorsque la première différence est supérieure à +2.5 pourcents,

- on ordonne le braquage desdits volets gauche et droit en leur faisant effectuer une rotation selon le sens senestrorsum autour de leurs axes de fixation à la surface aérodynamique associée lorsque la première différence est inférieure à -2.5 pourcents,

- on maintient en position lesdits volets gauche et droit lorsque la première différence est comprise entre -2.5 pourcents et +2.5 pourcents pour éviter des oscillations entretenues autour de l'objectif.

Selon une deuxième variante, la régulation de l'angle de braquage des volets gauche et droit étant activée, on mesure en temps réel un premier pas de l'hélice gauche et un deuxième pas de l'hélice droite puis on détermine en temps réel une deuxième différence du deuxième pas moins le premier pas et :

- on ordonne le braquage desdits volets gauche et droite en leur faisant effectuer une rotation selon le sens dextrorsum, lorsque la deuxième différence est supérieure à 0.3 degrés.

- on ordonne le braquage desdits volets gauche et droit en leur faisant effectuer une rotation selon le sens senestrorsum lorsque la deuxième différence est inférieure à -0.3 degrés.

- on maintient en position lesdits volets gauche et droit lorsque la deuxième différence est comprise entre -0.3 degrés et 0.3 degrés.

Selon une troisième variante, la régulation de l'angle de braquage des volets gauche et droit étant activée : on détermine en temps réel une première puissance consommée par l'hélice gauche égale à la première vitesse de rotation $\Omega 1$ de l'hélice gauche multipliée par le premier couple généré par l'hélice gauche et, d'autre part, une deuxième puissance consommée par l'hélice droite égale à la deuxième vitesse de rotation $\Omega 2$ de l'hélice droite multipliée par le deuxième couple généré par l'hélice droite, puis on détermine en temps réel une troisième différence de la deuxième puissance moins la première puissance et :

- on ordonne le braquage des volets gauche et droit en leur faisant effectuer une rotation selon le sens dextrorsum, lorsque ladite troisième différence est supérieure à +50 Kilowatts,

- on ordonne le braquage desdits volets gauche et droit en leur faisant effectuer une rotation selon le sens senestrorsum lorsque ladite troisième différence est inférieure à -50 Kilowatts,

- on maintient en position lesdits volets gauche et droit lorsque ladite troisième différence est comprise entre -50 Kilowatts et +50 Kilowatts pour éviter des oscillations entretenues autour de l'objectif.

Outre le procédé précédemment décrit, l'invention a pour objet le giravion mettant en oeuvre ce procédé.

Selon l'invention, un giravion muni d'un rotor principal de sustentation ainsi que d'une hélice gauche et d'une hélice droite disposées de part et d'autre d'un fuselage, ce giravion comportant un installation motrice apte à mettre en rotation les hélices gauche et droite ainsi que le rotor principal, le giravion comportant une surface aérodynamique gauche et une surface aérodynamique droite exerçant une portance transversale agencées respectivement dans le prolongement des hélices gauche et droite sur un empennage au voisinage d'une extrémité arrière dudit fuselage, est remarquable notamment en ce que, les surfaces aérodynamiques gauche et droite comportant respectivement un volet gauche et un volet droit, ces volets gauche et droit étant aptes à être braqués respectivement par un premier et un deuxième moyens de commande pour présenter un angle de braquage avec la surface aérodynamique associée, le giravion comporte :

- un premier moyen de mesure de vitesse de la vitesse air indiquée dudit giravion,

- un deuxième moyen de mesure de vitesse de la vitesse angulaire de roulis dudit giravion,

- un capteur d'effort apte à déterminer si un pilote exerce un effort sur un organe de commande de pas différentiel de type palonnier du giravion,

- un capteur angulaire mesurant l'angle de roulis du giravion,

- un capteur d'accélération mesurant le facteur de charge du giravion selon une direction transversale,

- un premier et un deuxième capteurs de couple des hélices gauche et droite ou un premier et deuxième moyens de mesure du pas des hélices gauche et droite, ou un premier et un deuxième capteurs de couple des hélices gauche et droite et un premier et un deuxième capteurs de vitesse de rotation des hélices gauche et droite,

- un moyen de contrôle apte à ordonner le braquage desdits volets gauche et droit en mettant en oeuvre le procédé selon l'invention à l'aide d'informations provenant des premier et deuxième moyens de mesure de vitesse, des capteurs d'efforts, angulaire et d'accélération, ainsi que d'un premier et d'un deuxième capteurs de couple ou desdits premier et deuxième moyens de mesure du pas ou des premier et deuxième capteurs de couple et des premier et deuxième capteurs de vitesse de rotation.

Avantageusement, le giravion est un hélicoptère hybride, les vitesses de rotation des sorties du ou des turbomoteurs, des hélices gauche et droite, du rotor principal et d'un système mécanique d'interconnexion entre les turbomoteurs, les hélices et le rotor, sont proportionnelles entre elles, le rapport de proportionnalité étant constant quelle que soit la configuration de vol de l'hélicoptère hybride en conditions normales de fonctionnement de la chaîne cinématique intégrée.

L'invention et ses avantages apparaîtront avec plus de détails dans le cadre de la description qui suit avec des exemples de réalisation donnés à titre illustratif en référence aux figures annexées qui représentent :

- la figure 1, une vue isométrique d'un hélicoptère hybride,

- la figure 2, un schéma explicatif montrant les moyens mis en oeuvre par l'invention selon une première variante préférée,

- la figure 3, un schéma explicatif montrant les moyens mis en oeuvre par l'invention selon une deuxième variante,

- les figures 4 et 5, des vues de dessus explicitant le fonctionnement du giravion à basse vitesse avec un rotor principal tournant dans le sens dextrorsum vu de dessus,

- les figures 6 et 7, des vues de dessus explicitant le fonctionnement du giravion à basse vitesse avec un rotor principal tournant dans le sens senestrorsum vu de dessus,

- les figures 8 et 9, des vues de dessus explicitant le fonctionnement du giravion à grande vitesse avec un rotor principal tournant dans le sens dextrorsum vu de dessus, et

- les figures 10 et 11, des vues de dessus explicitant le fonctionnement du giravion à grande vitesse avec un rotor principal tournant dans le sens senestrorsum vu de dessus.

Les éléments présents dans plusieurs figures distinctes sont affectés d'une seule et même référence.

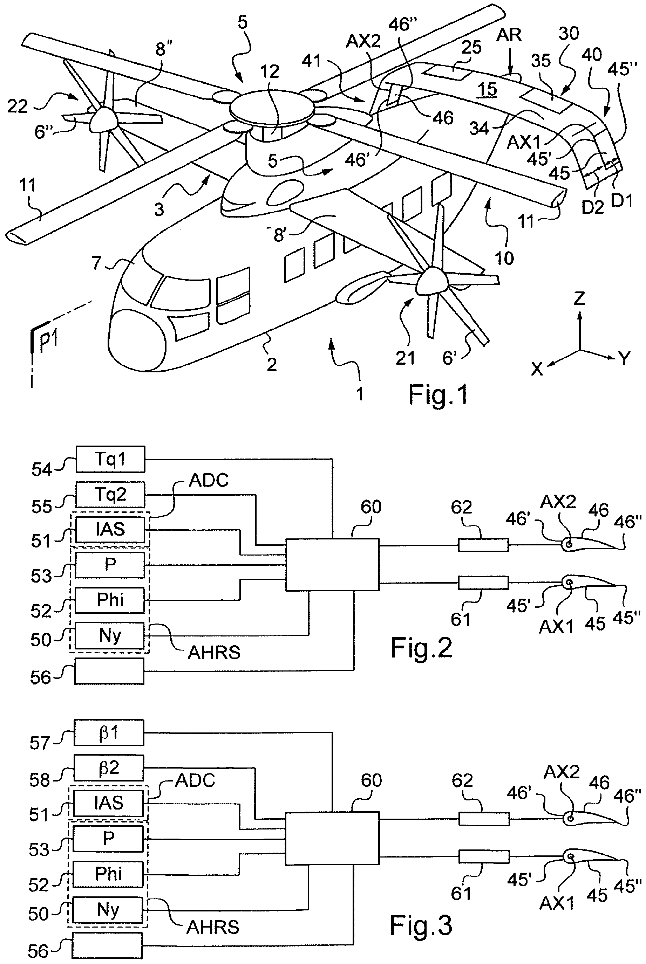

On note que trois directions X, Y et Z orthogonales les unes par rapport aux autres sont représentées sur la figure 1.

La direction X est dite longitudinale alors que la direction Y est dite transversale.

Enfin, une troisième direction Z est dite d'élévation.

La figure 1 présente un hélicoptère hybride 1 qui comprend un fuselage 2, à l'avant duquel est prévu le poste de pilotage 7, un rotor principal 10 destiné à entraîner en rotation des pales 11 grâce d'une part à une installation motrice 5' munie de deux turbomoteurs 5 disposés sur le dessus du fuselage 2, de part et d'autre par rapport au plan de symétrie longitudinal P1 du fuselage 2, et d'autre part à une première boîte d'engrenages principale.

Il est à noter que les deux turbomoteurs 5 ne sont pas visibles sur la figure 1 en raison de la présence de carénages.

De plus, l'hélicoptère hybride 1 est pourvu d'une aile haute 3 composée de deux demi-ailes 8', 8" disposées sur le dessus du fuselage 2.

La propulsion de l'hélicoptère hybride 1 est assurée notamment par une hélice gauche 21 et une hélice droite 22 entraînées par les deux turbomoteurs 5, une hélice 21, 22 étant disposée à chaque extrémité externe de l'aile 3. Les hélices gauche et droite 21, 22 comportent respectivement six premières pales 6' et six deuxièmes pales 6" sur l'exemple représenté.

Par ailleurs, il est prévu au voisinage de l'extrémité arrière AR du fuselage 2 un empennage horizontal 15 avec deux gouvernes de profondeur mobiles 25, 35 par rapport à la partie avant 34. Cet empennage 15 est en outre muni d'une surface aérodynamique gauche 40 et d'une surface aérodynamique droite 41 aptes à générer une portance transversale dirigée sensiblement selon la direction de l'empennage 15.

Plus précisément, les surfaces aérodynamiques gauche et droite 40, 41 sont agencées de chaque côté de l'empennage 15 de manière à se trouver respectivement dans le prolongement des hélices gauche 21 et droite 22. L'empennage 15 horizontal et les surfaces aérodynamiques gauche et droite 40, 41 forment un U renversé vers le fuselage 2.

De plus ces surfaces aérodynamiques gauche et droite 40, 41 sont sensiblement verticales, et donc parallèles au plan de symétrie longitudinal P1 du fuselage 2.

En outre, les surfaces aérodynamiques gauche et droite 40, 41 sont respectivement munies d'un volet gauche 45 et d'un volet droit 46.

En effet, un premier axe de fixation AX1 permet de fixer le bord d'attaque 45' du volet gauche à la surface aérodynamique gauche. Un premier moyen de commande non représenté sur la figure 1, un vérin rotatif par exemple, est alors apte à faire effectuer une rotation au volet gauche autour de son premier axe de fixation AX1 de manière à déplacer le bord de fuite 45" du volet gauche dans les sens dextrorsum ou senestrorsum vus de dessus.

Le premier moyen de commande permet donc de réguler l'angle de braquage du volet gauche 45 par rapport à la surface aérodynamique 40 gauche à savoir l'angle aigu séparant l'axe longitudinal passant par une direction longitudinale D1 du volet gauche 45 à l'axe longitudinal passant par une direction longitudinale D2 de la surface aérodynamique gauche.

De même, un deuxième axe de fixation AX2 permet de fixer le bord d'attaque 46' du volet droit à la surface aérodynamique droite 41. Un deuxième moyen de commande non représenté sur la figure 1, un vérin rotatif par exemple, est alors apte à faire effectuer une rotation au volet droit 46 autour de son deuxième axe de fixation AX2 de manière à déplacer le bord de fuite 46" du volet gauche 46 dans les sens dextrorsum ou senestrorsum vus de dessus.

Le deuxième moyen de commande permet donc de réguler l'angle de braquage du volet droit 46 par rapport à la surface aérodynamique droite 41.

On se rapportera à la littérature pour trouver des descriptions de moyens de commande d'un volet, parfois appelé volet de bord de fuite.

Pour contrôler le pas collectif et le pas cyclique des pales 11 du rotor principal 10, le pilote dispose respectivement d'un premier et d'un deuxième organes de commande usuels.

De même, pour maîtriser l'avancement de l'hélicoptère hybride, le pilote dispose d'un troisième organe de commande de poussée permettant de modifier le pas moyen des premières et deuxièmes pales 6', 6" des hélices gauche et droite 21, 22.

Plus précisément, la commande de poussée agit de manière identique sur les premier et deuxième pas des premières et deuxièmes pales 6', 6" afin d'obtenir une variation collective de ces premier et deuxième pas. Par exemple, le pilote va requérir une augmentation de 5° du pas moyen de l'ensemble des pales des hélices pour augmenter la poussée résultante générée notamment par les hélices gauche et droite 21, 22, ledit pas moyen des pales des hélices gauche et droite 21, 22 étant égal à la demi-somme des premier et deuxième pas des premières et deuxièmes pales 6', 6".

La commande de poussée peut comprendre un levier agissant sur une chaîne cinématique reliée aux première et deuxième hélices.

De manière alternative ou complémentaire, la commande de poussée est éventuellement pourvue d'un bouton apte à commander au moins un vérin disposé sur ladite chaîne cinématique. Ce bouton possède avantageusement trois positions, à savoir une première position requérant une augmentation du pas moyen des pales des hélices gauche et droite 21, 22, et donc une variation collective et de la même quantité des premier et deuxième pas des premières et deuxièmes pales 6', 6", une deuxième position requérant une diminution des premier et deuxième pas des premières et deuxièmes pales 6', 6" et enfin une troisième position ne requérant pas une modification des premier et deuxième pas des premières et deuxièmes pales 6', 6".

Pour contrôler l'attitude en lacet de l'hélicoptère hybride, le pilote dispose d'un organe de commande de pas différentiel de type palonnier pour engendrer une variation non plus collective mais différentielle des premier et deuxième pas des premières et deuxièmes pales 6', 6".

Afin d'optimiser le fonctionnement et notamment le point de fonctionnement des hélices gauche et droite 21, 22, l'invention propose un procédé et un dispositif d'ajustement innovant.

En référence à la figure 2, selon une première variante, le dispositif d'ajustement comporte :

- un capteur d'effort 56 apte à déterminer si un pilote exerce un effort sur le palonnier du giravion. Ce capteur d'effort est avantageusement le capteur d'effort intégré dans le vérin de trim du palonnier. Il renvoie un signal booléen « VRAI » lorsque le pilote agit sur le palonnier et un signal booléen « FAUX » lorsque le pilote n'agit pas sur le palonnier.

- un premier moyen de mesure de vitesse 51 de la vitesse air indiquée IAS du giravion. Ce premier moyen de mesure est par exemple l'instrument de mesure dénommé « AIR DATA COMPUTER » (ADC) par l'homme du métier en langue anglaise,

- un premier et un deuxième capteurs de couple 54, 55 des premier et deuxième couples Tq1, Tq2 générés par respectivement par les hélices gauche et droite 21, 22. Les premier et deuxième capteurs de couple 54, 55 sont avantageusement des capteurs de type couple maître. Néanmoins, les premier et deuxième capteurs de couple 54, 55 peuvent être des calculateurs déterminant les premier et deuxième couples Tq1, Tq2 à partir du pas des pales de l'hélice concernée, de leur vitesse de rotation , des conditions atmosphériques et de la vitesse air d'avancement à l'aide notamment de l'instrument « AIR DATA COMPUTER ». Les premier et deuxième couples Tq1, Tq2 sont exprimés en pourcent des couples maximaux aptes à être générés par les hélices gauche 21 et droite 22.

- un deuxième moyen de mesure de vitesse 53 de la vitesse angulaire de roulis P, ce deuxième moyen de mesure de vitesse 53 faisant partie de l'instrument de mesure dénommé « Attitude and Heading Référence System » (AHRS) par l'homme du métier en langue anglaise,

- un capteur angulaire 52 mesurant l'angle de roulis Phi du giravion, ce capteur angulaire 52 faisant partie de l'instrument de mesure dénommé « Attitude and Heading Référence System » (AHRS),

- un capteur d'accélération 50 mesurant le facteur de charge Ny du giravion selon une direction transversale Y, ce capteur d'accélération 50 faisant partie de l'instrument de mesure dénommé « Attitude and Heading Référence System » (AHRS).

On note que l'instrument de mesure dénommé « AIR DATA COMPUTER » (ADC) et l'instrument de mesure dénommé « Attitude and Heading Reference System » (AHRS) peuvent faire partie d'un seul et même instrument de mesure dénommé « Air Data, Attitude and Heading Référence System » (ADAHRS) en langue anglaise.

De plus, le dispositif d'ajustement comporte un moyen de contrôle 60, tel qu'un microprocesseur, apte à ordonner le braquage desdits volets gauche 45 et droit 46 en fonction d'informations provenant des premier et deuxième moyens de mesure de vitesse 51, 53, des capteurs d'efforts 56, angulaire 52 et d'accélération 50, ainsi que des premier et deuxième capteurs de couple 54, 55.

Si nécessaire, et donc en fonction de la logique programmée dans le moyen de contrôle 60, ce moyen de contrôle 60 ordonne à un premier moyen de commande 61, tel qu'un actionneur électrique, de faire pivoter le volet gauche 45 autour de son axe de fixation AX1 pour modifier son angle de braquage par rapport à la surface aérodynamique gauche.

De même, ledit moyen de contrôle 60 est apte à ordonner à un deuxième moyen de commande 62, tel qu'un actionneur électrique, de faire pivoter le volet droit 46 autour de son axe de fixation AX2 pour modifier son angle de braquage par rapport à la surface aérodynamique droite.

En référence à la figure 3, selon une deuxième variante, le dispositif d'ajustement ne comporte pas un premier et un deuxième capteurs de couple 54, 55. Selon cette deuxième variante, on utilise au contraire des premier et deuxième moyens de mesure 57, 58 des premier et deuxième pas β1, β2 des hélices gauche 21 et droite 22.

Il est à noter que les premier et deuxième pas β1, β2 étant ajustés par des actionneurs, les premier et deuxième moyens de mesure du pas 57, 58 peuvent consister en des capteurs de position desdits actionneurs.

Ainsi, en fonction de la position d'organes mobiles des actionneurs des hélices gauche et droit, le moyen de contrôle est à même de déduire lesdits premier et deuxième pas β1, β2.

Le moyen de contrôle 60, tel qu'un microprocesseur, est alors apte à ordonner le braquage desdits volets gauche 45 et droit 46 en fonction d'informations provenant des premier et deuxième moyens de mesure de vitesse 51, 53, des capteurs d'efforts 56, angulaires 52 et d'accélération 50, ainsi que des premier et deuxième moyens de mesure du pas 57, 58.

Dès lors, le moyen de contrôle active la régulation de l'angle de braquage des volets gauche et droit durant des phases de vol prédéterminées à savoir soit à basse vitesse, soit à haute vitesse durant un vol stabilisé en lacet.

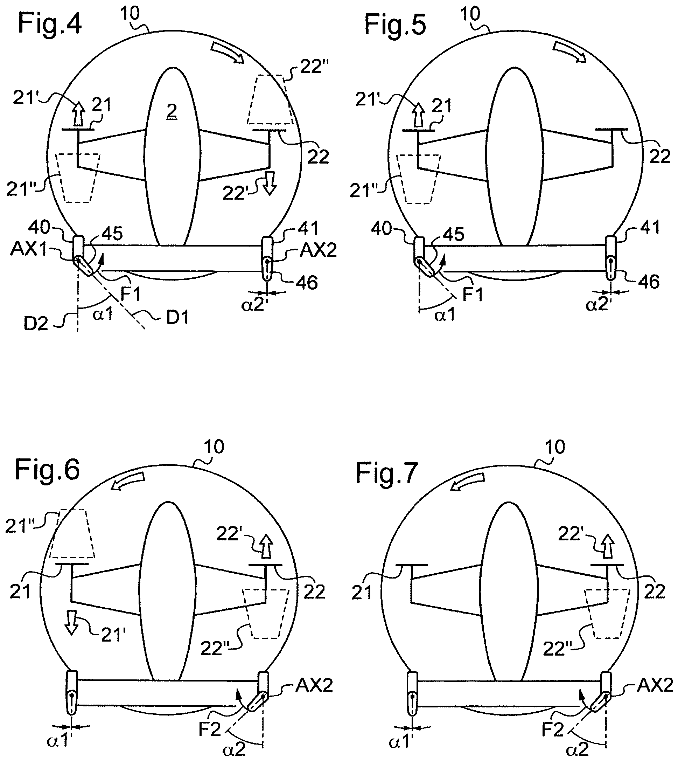

Les figures 4 à 7 explicitent le fonctionnement du giravion à basse vitesse, à savoir en dessous d'un seuil prédéterminé de la vitesse air indiquée IAS du giravion d'environ 50 noeuds (kts) soit 25.7 mètres par seconde.

Le rotor principal 10 étant entraîné en rotation par l'installation motrice selon un premier sens de rotation et générant un couple en lacet sur le fuselage 2 contrecarré notamment par une hélice propulsant un flux d'air 21", 22" vers l'arrière du giravion, le moyen de contrôle 60 régule l'angle de braquage α1, α2 du volet 45, 46 recevant le flux d'air 21", 22" dirigé vers l'arrière en faisant effectuer à ce volet 45, 46 une rotation selon un deuxième sens opposé audit premier sens pour lui faire atteindre un angle de braquage maximal par rapport à la surface aérodynamique associée.

En référence aux figures 4 et 5, le rotor principal tourne dans le sens dextrorsum vu de dessus.

Deux procédures limites de vol à basse vitesse, et à fortiori en stationnaire sont envisageables.

La première procédure de vol en stationnaire illustrée sur la figure 4 consiste à piloter le giravion afin que les hélices gauche 21 et droite 22 exercent alors chacune une poussée, dirigée selon des directions opposées, une hélice exerçant une poussée d'une valeur opposée à celle de l'autre hélice pour compenser le couple en lacet exercé par le rotor principal.

Le rotor principal tournant dans le sens dextrorsum, l'hélice gauche 21 exerce une poussée gauche propulsive 21', le flux d'air gauche 21" généré par cette hélice gauche 21 étant dirigé vers l'arrière du giravion. A contrario, l'hélice droite 22 exerce une poussée droite non propulsive 22', le flux d'air droit 22" généré par cette hélice droite 22 étant dirigé vers l'avant du giravion

La deuxième procédure de vol en stationnaire illustrée sur la figure 5 consiste à utiliser le moyen de commande en lacet afin qu'une hélice exerce une poussée non nulle vers l'avant et que l'autre hélice exerce une poussée nulle. Le rotor principal 10 tournant dans le sens dextrorsum, seule l'hélice gauche 21 exerce une poussée 21', le flux d'air gauche 21" généré par cette hélice gauche 21 étant dirigé vers l'arrière du giravion.

Indépendamment de la procédure de vol, et de la variante du dispositif d'ajustement, le moyen de contrôle 60 régule l'angle de braquage α1 du volet gauche 45 en faisant effectuer à ce volet gauche 45 une rotation selon un sens senestrorsum F1 vu de dessus, autour de son axe de fixation AX1, pour lui faire atteindre un angle de braquage maximal par rapport à la surface aérodynamique gauche 40.

L'angle de braquage α1 du volet gauche 45 est alors maximal.

A contrario, le moyen de contrôle 60 n'ordonne pas le braquage du volet droit 46, l'angle de braquage α2 du volet droit 46 étant nul.

Il est à noter que le moyen de contrôle 60 régule de cette manière les volets gauche 45 et 46 aussi bien en stationnaire qu'à basse vitesse, à savoir en dessous d'un seuil prédéterminé de la vitesse air indiquée IAS du giravion.

En référence aux figures 6 et 7, le rotor principal tourne dans le sens senestrorsum vu de dessus.

Indépendamment de la procédure de vol, et de la variante du dispositif d'ajustement, le moyen de contrôle 60 régule alors l'angle de braquage α2 du volet droit 46 en faisant effectuer à ce volet droit 46 une rotation selon un sens dextrorsum F2 vu de dessus, autour de son axe de fixation AX2, pour lui faire atteindre un angle de braquage maximal par rapport à la surface aérodynamique droite 41.

L'angle de braquage α2 du volet droit 46 est alors maximal.

A contrario, le moyen de contrôle 60 n'ordonne pas le braquage du volet gauche 45, l'angle de braquage α1 du volet gauche 45 étant nul.

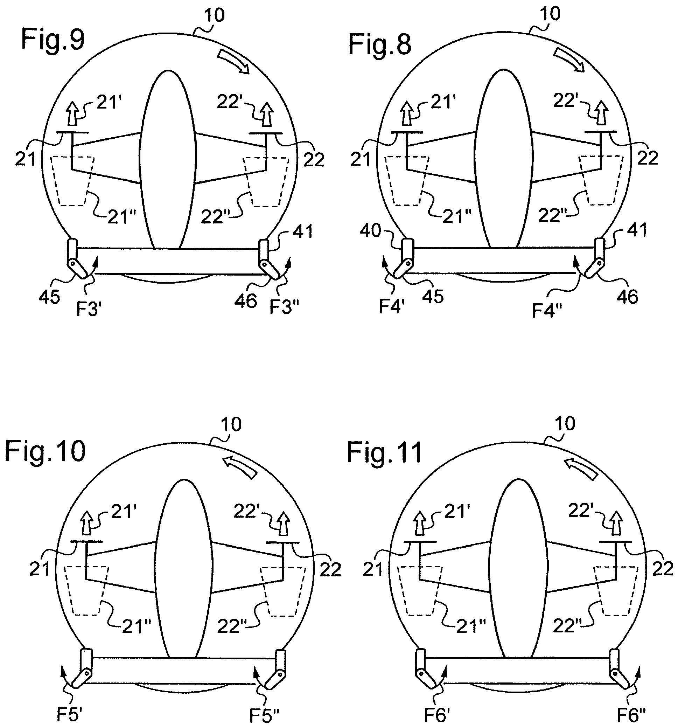

Les figures 8 à 11 explicitent le fonctionnement du giravion à grande vitesse, à savoir au dessus d'un seuil prédéterminé de la vitesse air indiquée IAS du giravion d'environ 50 noeuds (kts) soit 25.7 mètres par seconde.

Lorsque la vitesse air indiquée IAS du giravion est supérieure audit seuil prédéterminé, les hélices gauche et droite 21, 22 sont toutes deux en mode propulsif et génèrent respectivement un flux d'air gauche 21" et un flux d'air droit 22" dirigés vers l'arrière du giravion, plus précisément vers les surfaces aérodynamiques gauche 40 et droite 41.

Néanmoins, on note que la pression exercée par ces flux d'air gauche et droit est négligeable par rapport à la pression de l'air due à la vitesse d'avancement du giravion.

Dans ce contexte, le moyen de contrôle active la régulation de l'angle de braquage α1, α2 des volets gauche 45 et droit 46 si les conditions suivantes de vol stabilisé en lacet sont remplies :

- |Ny|<0.075 fois l'accélération de la pesanteur,

- |Phi| < 5 degrés,

- |P|< 10 degrés par seconde,

- le pilote n'exerce pas d'effort sur l'organe de commande de pas différentiel, le palonnier, cette absence d'effort étant détectée par un capteur d'effort 56,

où « |Ny| » représente la valeur absolue du facteur de charge du giravion selon une direction transversale dans le référentiel du giravion, « |Phi| » représente la valeur absolue de l'angle de roulis du giravion, « |P|» représente la valeur absolue de la vitesse angulaire de roulis du giravion.

Selon la première variante, le moyen de contrôle 60 détermine alors en temps réel une première différence ΔTq dudit deuxième couple Tq2 moins ledit premier couple Tq1 et :

- ordonne le braquage des volets gauche 45 et droit 46 en leur faisant effectuer une rotation selon le sens dextrorsum, lorsque ladite première différence est supérieure à +2.5 pourcents,

- ordonne le braquage desdits volets gauche 45 et droit 46 en leur faisant effectuer une rotation selon le sens senestrorsum lorsque ladite première différence est inférieure à -2.5 pourcents,

- maintient en position lesdits volets gauche 45 et droit 46 lorsque ladite première différence est comprise entre -2.5 pourcents et +2.5 pourcents.

Selon la deuxième variante, le moyen de contrôle 60 détermine en temps réel une deuxième différence Δβ du deuxième pas β2 moins le premier pas β1 et :

- ordonne le braquage desdits volets gauche et droit en leur faisant effectuer une rotation selon le sens dextrorsum, lorsque la deuxième différence est supérieure à 0.3 degrés.

- ordonne le braquage desdits volets gauche et droit en leur faisant effectuer une rotation selon le sens senestrorsum lorsque la deuxième différence est inférieure à -0.3 degrés.

- maintient en position lesdits volets gauche et droit lorsque la deuxième différence est comprise entre -0.3 degrés et 0.3 degrés.

Selon la troisième variante, le moyen de contrôle 60 détermine en temps réel :

- une première puissance consommée par l'hélice gauche égale à la première vitesse de rotation $\Omega1$ de l'hélice gauche multipliée par le premier couple Tq1 généré par l'hélice gauche, la première vitesse de rotation $\Omega1$ et le premier couple Tq1 étant fournis respectivement par un premier capteur de vitesse usuel et le premier capteur de couple 54,

- une deuxième puissance consommée par l'hélice droite égale à la deuxième vitesse de rotation $\Omega2$ de l'hélice droite multipliée par le deuxième couple Tq2 généré par l'hélice droite, la deuxième vitesse de rotation $\Omega2$ et le deuxième couple Tq2 étant fournis respectivement par un deuxième capteur de vitesse usuel et le deuxième capteur de couple 55,

- une troisième différence de la deuxième puissance moins la première puissance.

Dès lors, le moyen de commande :

- ordonne le braquage des volets gauche et droit en leur faisant effectuer une rotation selon le sens dextrorsum, lorsque ladite troisième différence est supérieure à +50 Kilowatts,

- ordonne le braquage desdits volets gauche et droit en leur faisant effectuer une rotation selon le sens senestrorsum lorsque ladite troisième différence est inférieure à -50 Kilowatts,

- maintient en position lesdits volets gauche et droit lorsque ladite troisième différence est comprise entre -50 Kilowatts et +50 Kilowatts.

Il est à noter que, contrairement à la commande demandée à basse vitesse, à haute vitesse le moyen de contrôle n'ordonne pas de braquer à fond les volets gauche et droit mais ordonne une rotation continue et progressive dans le temps de ces volets gauche et droit.

En référence aux figures 8 et 9, le rotor principal tourne dans le sens dextrorsum vu de dessus.

Conformément à la figure 8, si une première condition est remplie, le moyen de contrôle ordonne une rotation progressive des volets gauche 45 et droit 46 selon le sens dextrorsum F4', F4". Selon la première variante, la première condition est remplie quand la première différence $\Delta$Tq est supérieur à +2.5 pourcents alors que, selon la deuxième variante, la première condition est remplie quand la deuxième différence $\Delta\beta$ est supérieure à 0.3 degrés.

Conformément à la figure 9, si une deuxième condition est remplie, le moyen de contrôle ordonne une rotation progressive des volets gauche 45 et droit 46 selon le sens senestrorsum F3', F3". Selon la première variante, la deuxième condition est remplie quand la première différence $\Delta$Tq est inférieure à -2.5 pourcents alors que, selon la deuxième variante, la deuxième condition est remplie quand la deuxième différence $\Delta\beta$ est inférieure à -0.3 degrés.

Enfin, si une troisième condition est remplie, le moyen de contrôle n'ordonne pas le braquage de volets gauche et droit. Selon la première variante, la troisième condition est remplie quand la première différence $\Delta$Tq est comprise entre -2.5 pourcents et +2.5 pourcents alors que, selon la deuxième variante, la troisième condition est remplie quand la deuxième différence $\Delta\beta$ est comprise entre -0.3 degrés et 0.3 degrés.

A contrario, en référence aux figures 10 et 11, le rotor principal tourne dans le sens senestrorsum vue de dessus.

Conformément à la figure 10, si ladite première condition est remplie, le moyen de contrôle ordonne une rotation progressive des volets gauche 45 et droit 46 selon le sens dextrorsum F5', F5".

Conformément à la figure 11, si ladite deuxième condition est remplie, le moyen de contrôle ordonne une rotation progressive des volets gauche 45 et droit 46 selon le sens senestrorsum F6', F6".

Enfin, si ladite troisième condition est remplie, le moyen de contrôle n'ordonne pas le braquage de volets gauche et droit.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente. La portée de l'invention est définie par les revendications annexées.

## Revendications

1. Procédé pour optimiser le fonctionnement d'une hélice gauche (21) et d'une hélice droite (22) disposées de part et d'autre du fuselage (2) d'un giravion (1) et aptes à générer un flux d'air (21", 22") propulsif, ledit giravion (1) comportant un rotor principal (10) de sustentation ainsi qu'une installation motrice (5) apte à mettre en rotation lesdites hélices gauche (21) et droite (22) ainsi que ledit rotor principal (10), ledit giravion (1) comportant une surface aérodynamique gauche (40) et une surface aérodynamique droite (41) exerçant une portance transversale agencées respectivement dans le prolongement desdites hélices gauche (21) et droite (22) sur un empennage (15) au voisinage d'une extrémité arrière (AR) dudit fuselage (2), lesdites surfaces aérodynamiques gauche (40) et droite (41) comportant respectivement un volet gauche (45) et un volet droit (46) aptes à être braqués pour présenter un angle de braquage ($\alpha1$, $\alpha2$) avec la surface aérodynamique (40, 41) associée,

**caractérisé en ce que** la stabilisation en lacet dudit giravion (1) étant assurée au travers d'un premier et d'un deuxième pas respectivement des hélices gauche (21) et droite (22), on active la régulation de l'angle de braquage ($\alpha$1, $\alpha$2) des volets gauche (45) et droit (46) uniquement durant des phases de vol prédéterminées pour minimiser un pas différentiel des hélices gauche (21) et droite (22) afin d'optimiser le fonctionnement desdites hélices gauche (21) et droite (22), lesdites phases de vol prédéterminées incluant les phases de vol à basse vitesse réalisé à une vitesse air indiquée (IAS) du giravion inférieure à un seuil prédéterminé et des phases de vol stabilisées en lacet à haute vitesse réalisées à une vitesse air indiquée (IAS) du giravion supérieur audit seuil prédéterminé, et **en ce que** lorsque ladite vitesse air indiquée (IAS) du giravion (1) est supérieure audit seuil prédéterminé, on active la régulation de l'angle de braquage desdits volets gauche et droit (45, 46) si les conditions suivantes de vol stabilisé en lacet sont remplies :

    - |Ny|<0.075 fois l'accélération de la pesanteur,
    - |Phi| < 5 degrés,
    - |P|<10 degrés par seconde
    - aucun pilote n'exerce d'effort sur un organe de commande de pas différentiel apte à ordonner une variation différentielle des premier et deuxième pas des pales (6', 6") des hélices gauche (21) et droite (22).

où « |Ny| » représente la valeur absolue du facteur de charge du giravion selon une direction transversale dans le référentiel du giravion, « |Phi| » représente la valeur absolue de l'angle de roulis du giravion, « |P| » représente la valeur absolue de la vitesse angulaire de roulis du giravion..

**2.** Procédé selon la revendication 1,
**caractérisé en ce que**, lorsqu'une vitesse air indiquée du giravion (IAS) est inférieure à un seuil prédéterminé, le rotor principal (10) étant entraîné en rotation par ladite installation motrice (5) selon un premier sens de rotation et générant un couple sur ledit fuselage (2) contrecarré notamment par une hélice propulsant un flux d'air vers l'arrière dudit giravion (1), on régule l'angle de braquage du volet recevant ledit flux d'air dirigé vers l'arrière en faisant effectuer audit volet une rotation selon un deuxième sens opposée audit premier sens pour lui faire atteindre un angle de braquage maximal par rapport à la surface aérodynamique associée.

**3.** Procédé selon la revendication 2,
**caractérisé en ce que**, lorsqu'une vitesse air indiquée (IAS) du giravion (1) est inférieure à un seuil prédéterminé, le rotor principal (10) étant entraîné en rotation par ladite installation motrice (5) selon un sens dextrorsum vu de dessus, on régule l'angle de braquage ($\alpha$1) du volet gauche (45) en faisant effectuer au volet gauche (45) une rotation selon un sens senestrorsum vu de dessus pour lui faire atteindre un angle de braquage ($\alpha$1) maximal par rapport à la surface aérodynamique gauche (40).

**4.** Procédé selon la revendication 2,
**caractérisé en ce que**, lorsqu'une vitesse air indiquée (IAS) du giravion (1) est inférieure à un seuil prédéterminé, le rotor principal (10) étant entraîné en rotation par ladite installation motrice (5) selon un sens senestrorsum vu de dessus, on régule l'angle de braquage ($\alpha$2) du volet droit (46) en faisant effectuer au volet droit (46) une rotation selon un sens dextrorsum vu de dessus pour lui faire atteindre un angle de braquage ($\alpha$2) maximal par rapport à la surface aérodynamique droite (41).

**5.** Procédé selon la revendication 1,
**caractérisé en ce que** la régulation de l'angle de braquage ($\alpha$1, $\alpha$2) desdits volets gauche (45) et droit (46) étant activée, on mesure en temps réel un premier couple (Tq1) généré par l'hélice gauche (21) en pourcent du couple maximale et un deuxième couple (Tq2) généré par l'hélice droite (22) en pourcent du couple maximale puis on détermine en temps réel une première différence ($\Delta$Tq) dudit deuxième couple (Tq2) moins ledit premier couple (Tq1) et :

    - on ordonne le braquage desdits volets gauche (45) et droit (46) en leur faisant effectuer une rotation selon le sens dextrorsum, lorsque ladite première différence ($\Delta$Tq) est supérieure à +2.5 pourcents,
    - on ordonne le braquage desdits volets gauche (45) et droit (46) en leur faisant effectuer une rotation selon le sens senestrorsum lorsque ladite première différence ($\Delta$Tq) est inférieure à -2.5 pourcents,
    - on maintient en position lesdits volets gauche (45) et droit (46) lorsque ladite première différence ($\Delta$Tq) est comprise entre - 2.5 pourcents et +2.5 pourcents.

**6.** Procédé selon la revendication 1,
**caractérisé en ce que** la régulation de l'angle de braquage ($\alpha$1, $\alpha$2) desdits volets gauche (45) et droit (46) étant activée, on mesure en temps réel un premier pas ($\beta$1) de l'hélice gauche (21) et un deuxième pas ($\beta$2) de l'hélice droite (22) puis on détermine en temps réel une deuxième différence ($\Delta\beta$) dudit deuxième pas ($\beta$2) moins ledit premier pas ($\beta$1) et :

    - on ordonne le braquage desdits volets gauche (45) et droit (46) en leur faisant effectuer une rotation selon le sens dextrorsum, lorsque ladite deuxième différence ($\Delta\beta$) est supérieure à 0.3 degrés,

- on ordonne le braquage desdits volets gauche (45) et droit (46) en leur faisant effectuer une rotation selon le sens senestrorsum lorsque ladite deuxième différence ($\Delta\beta$) est inférieure à -0.3 degrés,
- on maintient en position lesdits volets gauche (45) et droit (46) lorsque ladite deuxième différence ($\Delta\beta$) est comprise entre - 0.3 degrés et 0.3 degrés.

**7.** Procédé selon la revendication 1,
**caractérisé en ce que** la régulation de l'angle de braquage ($\alpha 1$, $\alpha 2$) desdits volets gauche (45) et droit (46) étant activée, on détermine en temps réel une première puissance consommée par l'hélice gauche (21) et, d'autre part, une deuxième puissance consommée par l'hélice droite (22), puis on détermine en temps réel une troisième différence de la deuxième puissance moins la première puissance et :

- on ordonne le braquage des volets gauche et droit en leur faisant effectuer une rotation selon le sens dextrorsum, lorsque ladite troisième différence est supérieure à +50 Kilowatts,
- on ordonne le braquage desdits volets gauche et droit en leur faisant effectuer une rotation selon le sens senestrorsum lorsque ladite troisième différence est inférieure à -50 Kilowatts,
- on maintient en position lesdits volets gauche et droit lorsque ladite troisième différence est comprise entre -50 Kilowatts et +50 Kilowatts.

**8.** Procédé selon l'une quelconque des revendications précédentes,
**caractérisé en ce que** ledit seuil prédéterminé est égal à 25.7 mètres par seconde.

**9.** Giravion (1) muni d'un rotor principal (10) de sustentation ainsi que d'une hélice gauche (21) et d'une hélice droite (22) disposées de part et d'autre d'un fuselage, ledit giravion comportant un installation motrice apte à mettre en rotation lesdites hélices gauche (21) et droite (22) ainsi que ledit rotor principal (10), ledit giravion (1) comportant une surface aérodynamique gauche (40) et une surface aérodynamique droite (41) exerçant une portance transversale agencées respectivement dans le prolongement desdites hélices gauche (21) et droite (22) sur un empennage (15) au voisinage d'une extrémité arrière (AR) dudit fuselage (2), lesdites surfaces aérodynamiques gauche (40) et droite (41) comportant respectivement un volet gauche (45) et un volet droit (46), lesdits volets gauche (45) et droit (46) étant aptes à être braqués respectivement par un premier et un deuxième moyens de commande (61, 62) pour présenter un angle de braquage avec la surface aérodynamique (40, 41) associée,
**caractérisé en ce que**, ledit giravion (1) comporte :

- un premier moyen de mesure de vitesse (51) de la vitesse air indiquée (IAS) dudit giravion (1),
- un deuxième moyen de mesure de vitesse (53) de la vitesse angulaire de roulis (P) dudit giravion (1),
- un capteur d'effort (56) apte à déterminer si un pilote exerce un effort sur un organe de commande de pas différentiel du giravion (1),
- un capteur angulaire (52) mesurant l'angle de roulis (Phi) du giravion,
- un capteur d'accélération (50) mesurant le facteur de charge (Ny) du giravion selon une direction transversale,
- un premier et un deuxième capteurs de couple (54, 55) des hélices gauche (21) et droite (22) ou un premier et deuxième moyens de mesure du pas (57, 58) des hélices gauche (21) et droite (22), ou un premier et un deuxième capteurs de couple (54, 55) des hélices gauche (21) et droite (22) et un premier et un deuxième capteurs de vitesse de rotation ($\Omega 1$, $\Omega 2$) des hélices gauche (21) et droite (22),
- un moyen de contrôle (60) apte à ordonner le braquage desdits volets gauche (45) et droit (46) en utilisant des premier et deuxième moyens de mesure de vitesse (51, 53), des capteurs d'efforts (56), angulaire (52) et d'accélération (50), ainsi que des premier et deuxième capteurs de couple (54, 55) en mettant en oeuvre le procédé selon la revendication 5 ou des premier et deuxième moyens de mesure du pas (57, 58) en mettant en oeuvre le procédé selon la revendication 6 ou des premier et deuxième capteurs de couple et des premier et deuxième capteurs de vitesse de rotation en mettant en oeuvre le procédé selon la revendication 7.

**10.** Giravion selon la revendication 9,
**caractérisé en ce que** ledit giravion (1) est un hélicoptère hybride, les vitesses de rotation des sorties du ou des turbomoteurs (5), des hélices gauche (21) et droite (22), du rotor principal (10) et d'un système mécanique d'interconnexion entre lesdites turbomoteur (5), lesdites hélices (21, 22) et ledit rotor (10), sont proportionnelles entre elles, le rapport de proportionnalité étant constant quelle que soit la configuration de vol de l'hélicoptère hybride en conditions normales de fonctionnement de la chaîne cinématique intégrée.

**Patentansprüche**

**1.** Verfahren zur Leistungsoptimierung eines linken Propellers (21) und eines rechten Propellers (22), die zu beiden Seiten eines Rumpfes (2) eines Drehflügelflugzeugs (1) angeordnet sind und eine Vortriebsluftströmung (21", 22") erzeugen können, wobei das Drehflügelflugzeug (1) einen Hauptauftriebsrotor (10) sowie ein Antriebsaggregat (5) aufweist, das den linken Propeller (21) und den rechten Propeller (22) sowie den Hauptrotor (10) in eine Drehbewegung versetzen kann, wobei das Drehflügelflugzeug (1) eine linke aerodynamische Fläche (40) und eine rechte aerodynamische Fläche (41) aufweist, die einen transversalen Auftrieb entfalten und die jeweils in der Verlängerung des linken (21) und des rechten (22) Propellers auf einem Leitwerk (15) nahe einem hinteren Ende (AR) des Rumpfes (2) angeordnet sind, wobei die linke (40) und rechte (41) aerodynamische Fläche jeweils eine linke Klappe (45) und eine rechte Klappe (46) aufweisen, die eingeschlagen werden können, um einen Einschlagswinkel ($\alpha$1, $\alpha$2) mit der zugehörigen aerodynamischen Fläche (40, 41) zu bilden, **dadurch gekennzeichnet, dass** die Gierstabilisierung des Drehflügelflugzeugs (1) über einen ersten und einen zweiten Verstellwinkel des linken (21) und des rechten (22) Propellers sichergestellt wird, wobei die Einstellung des Einschlagwinkels ($\alpha$1, $\alpha$2) der linken (45) und der rechten (46) Klappe nur während vorbestimmter Flugphasen aktiviert wird, um eine differentielle Winkelverstellung des linken (21) und des rechten (22) Propellers zu minimieren, um die Leistung des linken (21) und des rechten (22) Propellers zu optimieren, wobei die vorbestimmten Flugphasen die Flugphasen bei niedriger Geschwindigkeit umfassen, die bei einer angezeigten Fluggeschwindigkeit (IAS) des Drehflügelflugzeugs ausgeführt werden, die kleiner ist als ein vorbestimmter Schwellenwert, und gierstabilisierte Phasen bei hoher Geschwindigkeit, die bei einer angezeigten Fluggeschwindigkeit (IAS) des Drehflügelflugzeugs ausgeführt werden, die größer ist als der vorbestimmte Schwellenwert, und dadurch, dass, wenn die angezeigte Fluggeschwindigkeit (IAS) des Drehflügelflugzeugs (1) größer als der vorbestimmte Schwellenwert ist, die Einstellung des Einschlagswinkels der rechten und linken Klappen (45, 46) aktiviert wird, wenn folgende Bedingungen des gierstabilisierten Flugs erfüllt sind:

- |Ny| < 0,075 mal Erdbeschleunigung,
- |Phi| < 5 Grad,
- |P| < 10 Grad pro Sekunde,
- kein Pilot übt eine Kraft auf ein Steuerelement der differentiellen Winkelverstellung aus, die in der Lage ist, eine differentielle Änderung des ersten und des zweiten Verstellwinkels der Rotorblätter (6', 6") des linken (21) und des rechten (22) Propellers zu veranlassen,

wobei "|Ny|" den Absolutwert des Lastfaktors des Drehflügelflugzeugs in einer transversalen Richtung in dem Koordinatensystem des Drehflügelflugzeugs darstellt, " |Phi|" den Absolutwert des Rollwinkels des Drehflügelflugzeugs darstellt, "|P|" den Absolutwert der Winkelgeschwindigkeit des Rollens des Drehflügelflugzeugs darstellt.

2. Verfahren nach Anspruch 1, **dadurch gekennzeichnet, dass**, wenn die angezeigte Fluggeschwindigkeit (IAS) des Drehflügelflugzeugs kleiner als ein vorbestimmter Schwellenwert ist, wobei der Hauptrotor (10) durch das Antriebsaggregat (5) in einer ersten Drehrichtung angetrieben wird und auf den Rumpf (2) ein Drehmoment ausübt, dem insbesondere ein Propeller entgegenwirkt, der eine Luftströmung zum Heck des Drehflügelflugzeugs (1) ausstößt, der Einschlagwinkel der Klappe, die die zum Heck geleitete Luftströmung empfängt, eingestellt wird, indem man die Klappe eine Drehung in eine zweite Richtung ausüben lässt, die entgegengesetzt zu der ersten Richtung ist, um sie einen maximalen Einschlagswinkel relativ zu der zugehörigen aerodynamischen Fläche erreichen zu lassen.

3. Verfahren nach Anspruch 2, **dadurch gekennzeichnet, dass**, wenn die angezeigte Fluggeschwindigkeit (IAS) des Drehflügelflugzeugs (1) kleiner als ein vorbestimmter Schwellenwert ist, wobei der Hauptrotor (10) durch das Antriebsaggregat (5) in einer von oben gesehen rechtsdrehenden Richtung angetrieben wird, der Einschlagwinkel ($\alpha$1) der linken Klappe (45) eingestellt wird, indem man die linke Klappe (45) eine von oben gesehen linksdrehende Drehung ausüben lässt, um sie einen maximalen Einschlagswinkel ($\alpha$1) relativ zu der linken aerodynamischen Fläche (40) erreichen zu lassen.

4. Verfahren nach Anspruch 2, **dadurch gekennzeichnet, dass**, wenn die angezeigte Fluggeschwindigkeit (IAS) des Drehflügelflugzeugs (1) kleiner als ein vorbestimmter Schwellenwert ist, wobei der Hauptrotor (10) durch das Antriebsaggregat (5) in einer von oben gesehen linksdrehenden Richtung angetrieben wird, der Einschlagwinkel ($\alpha$2) der rechten Klappe (46) eingestellt wird, indem man die rechte Klappe (46) eine von oben gesehen rechtsdrehende Drehung ausüben lässt, um sie einen maximalen Einschlagswinkel ($\alpha$2) relativ zu der rechten aerodynamischen Fläche (41) erreichen zu lassen.

5. Verfahren nach Anspruch 1, **dadurch gekennzeichnet, dass**, wenn die Einstellung des Einschlagswinkels ($\alpha$1, $\alpha$2) der linken (45) und der rechten Klappe (46) aktiviert ist, in Echtzeit ein erstes Drehmoment (Tq1) gemessen wird, das von dem linken Propeller (21) erzeugt wird, als ein Prozentsatz des maximalen Drehmoments, und ein zweites Drehmoment (Tq2) gemessen wird, das von dem rechten Propeller (2) als ein Prozentsatz des maximalen Drehmoments gemessen wird und dann in Echtzeit eine erste Differenz (ΔTq) zwischen dem zweiten Drehmoment (Tq2) minus dem ersten Drehmoment (Tq1) bestimmt wird, und:

- das Einschlagen der linken Klappe (45) und der rechten Klappe (46) befohlen wird, indem man sie eine Drehung nach rechts ausüben lässt, wenn die erste Differenz (ΔTq) größer als +2,5% ist,
- das Einschlagen der linken Klappe (45) und der rechten Klappe (46) befohlen wird, indem man sie eine Drehung nach links ausüben lässt, wenn die erste Differenz (ΔTq) kleiner als -2,5% ist,
- die linke Klappe (45) und die rechte Klappe (46) in ihrer Stellung gehalten werden, wenn die erste Differenz (ΔTq) zwischen -2,5% und +2,5% liegt.

6. Verfahren nach Anspruch 1, **dadurch gekennzeichnet, dass**, wenn die Einstellung des Einschlagwinkels (α1, α2) der linken Klappe (45) und der rechten Klappe (46) aktiviert ist, in Echtzeit ein erster Verstellwinkel (β1) des linken Propellers (21) und ein zweiter Verstellwinkel (β2) des rechten Propellers (22) gemessen wird, und dann in Echtzeit eine zweite Differenz (Δβ) des zweiten Verstellwinkels (β2) minus des ersten Verstellwinkels (β1) bestimmt wird, und:

- das Einschlagen der linken Klappe (45) und der rechten Klappe (46) befohlen wird, indem man sie eine Rechtsdrehung ausüben lässt, wenn die zweite Differenz (Δβ) größer als 0,3 Grad ist,
- das Einschlagen der linken Klappe (45) und der rechten Klappe (46) befohlen wird, indem man sie eine Linksdrehung ausüben lässt, wenn die zweite Differenz (Δβ) kleiner als -0,3 Grad ist,
- die Stellung der linken Klappe (45) und der rechten Klappe (46) beibehalten wird, wenn die zweite Differenz (Δβ) schen -0,3 Grad und 0,3 Grad liegt.

7. Verfahren nach Anspruch 1, **dadurch gekennzeichnet, dass**, wenn die Einstellung des Einschlagswinkels (α1, α2) der linken Klappe (45) und der rechten Klappe (46) aktiviert ist, in Echtzeit eine erste von dem linken Propeller (21) verbrauchte Leistung bestimmt wird, und andererseits eine zweite von dem rechten Propeller (22) verbrauchte Leistung bestimmt wird, und dann in Echtzeit eine dritte Differenz der zweiten Leistung minus der ersten Leistung bestimmt wird, und:

- das Einschlagen der linken und der rechten Klappe befohlen wird, indem man sie eine Rechtsdrehung ausüben lässt, wenn die dritte Differenz größer als +50 Kilowatt beträgt,
- das Einschlagen der linken Klappe und der rechten Klappe befohlen wird, indem man sie eine Linksdrehung ausüben lässt, wenn die dritte Differenz kleiner als -50 Kilowatt beträgt,
- die Position der linken und rechten Klappe beibehalten wird, wenn die dritte Differenz zwischen -50 Kilowatt und +50 Kilowatt liegt.

8. Verfahren nach einem der vorstehenden Ansprüche, **dadurch gekennzeichnet, dass** der vorbestimmte Schwellenwert gleich 25,7 Meter pro Sekunde beträgt.

9. Drehflügelflugzeug (1) mit einem Hauptauftriebsrotor (10) sowie einem linken Propeller (21) und einem rechten Propeller (22), die zu beiden Seiten eines Rumpfes angeordnet sind, wobei das Drehflügelflugzeug ein Antriebsaggregat aufweist, das den linken Propeller (21) und den rechten Propeller (22) sowie den Hauptrotor (10) in eine Drehbewegung versetzen kann, wobei das Drehflügelflugzeug (1) eine linke aerodynamische Fläche (40) und eine rechte aerodynamische Fläche (41) aufweist, die einen transversalen Auftrieb entfalten, die jeweils in der Verlängerung des linken (21) und des rechten Propellers (22) auf einem Leitwerk (15) nahe einem hinteren Ende (AR) des Rumpfes (2) angeordnet sind, wobei die linke (40) und rechte aerodynamische Fläche (41) jeweils eine linke Klappe (45) und eine rechte Klappe (46) aufweisen, wobei die linke Klappe (45) und die rechte Klappe (46) jeweils durch ein erstes und ein zweites Steuerelement (61, 62) eingeschlagen werden könne, um mit der zugehörigen aerodynamischen Fläche (40, 41) einen Einschlagswinkel einzunehmen, **dadurch gekennzeichnet, dass** das Drehflügelflugzeug (1) aufweist:

- ein erstes Geschwindigkeitsmesselement (51) zur Messung der angezeigten Fluggeschwindigkeit (IAS) des Drehflügelflugzeugs (1),
- ein zweites Geschwindigkeitsmesselement (53) zur Messung der Winkelgeschwindigkeit der Rollbewegung (P) des Drehflügelflugzeugs (1),
- einen Kraftsensor (56), der bestimmen kann, ob ein Pilot eine Kraft auf ein Element zur Steuerung der differentiellen Winkelverstellung des Drehflügelflugzeugs ausübt,
- einen Winkelsensor (52), der den Rollwinkel (Phi) des Drehflügelflugzeugs misst,

- einen Beschleunigungssensor (50), der den Lastfaktor (Ny) des Drehflügelflugzeugs in einer transversalen Richtung misst,
- einen ersten und einen zweiten Drehmomentsensor (54, 55) zur Messung des Drehmoments des linken Propellers (21) und des rechten Propellers (22) oder ein erstes und zweites Messelement (57, 58) zur Messung des Verstellwinkels des linken Propellers (21) und des rechten Propellers (22), oder einen ersten und einen zweiten Sensor (54, 55) zur Messung des Drehmoments des linken Propellers (21) und des rechten Propellers (22), und einen ersten und einen zweiten Sensor zur Messung der Drehgeschwindigkeit ($\Omega$1, $\Omega$2) des linken Propellers (21) und des rechten Propellers (22),
- ein Steuerelement (60), das das Einschlagen der linken Klappe (45) und der rechten Klappe (46) befehlen kann unter Verwendung des ersten und des zweiten Geschwindigkeitsmesselements (51, 53), der Kraftsensoren (56), der Winkelmesselemente (52) und Beschleunigungsmesselemente (50), sowie erster und zweiter Drehmomentsensoren (54, 55), indem das Verfahren nach Anspruch 5 durchgeführt wird, oder erster und zweiter Verstellwinkelmesselemente (57, 58), indem das Verfahren nach Anspruch 6 ausgeführt wird, oder erster und zweiter Drehmomentsensoren und erster und zweiter Drehgeschwindigkeitssensoren, indem das Verfahren nach Anspruch 7 ausgeführt wird.

10.  Drehflügelflugzeug nach Anspruch 9,
    **dadurch gekennzeichnet, dass** das Drehflügelflugzeug (1) ein Hybridhelikopter ist mit Ausgangsdrehzahlen des Turbomotors (5) oder der Turbomotoren (5) des linken Propellers (21) und des rechten Propellers (22) des Hauptrotors (10) und eines mechanischen Verbindungssystems zwischen dem Turbomotor (5), den Propellern (21, 22) und dem Rotor (10), die proportional zueinander sind, wobei das Proportionalitätsverhältnis konstant ist, unabhängig von der Flugkonfiguration des Hybridhelikopters unter normalen Betriebsbedingungen der integrierten Antriebskette.

## Claims

1.  A method of optimising the operation of a left propeller (21) and a right propeller (22) which are arranged on either side of the fuselage (2) of a rotorcraft (1) and are capable of generating a propulsive airflow (21", 22"), said rotorcraft (1) comprising a main lift rotor (10) and also a power plant (5) capable of causing said left (21) and right (22) propellers and also said main rotor (10) to rotate, said rotorcraft (1) comprising a left aerodynamic surface (40) and a right aerodynamic surface (41) which exert transverse lift and are arranged respectively in the extension of said left (21) and right (22) propellers on a tail unit (15) in the vicinity of a rear end (AR) of said fuselage (2), said left (40) and right (41) aerodynamic surfaces comprising respectively a left flap (45) and a right flap (46) which are capable of being deflected in order to present an angle of deflection ($\alpha$1, $\alpha$2) with the associated aerodynamic surface (40, 41),
    **characterised in that**, the yaw of said rotorcraft (1) being stabilised by means of a first and a second pitch respectively of the left (21) and right (22) propellers, the regulation of the angle of deflection ($\alpha$1, $\alpha$2) of the left (45) and right (46) flaps is activated solely during predetermined flight phases in order to minimise a differential pitch of the left (21) and right (22) propellers in order to optimise the operation of said left (21) and right (22) propellers, said predetermined flight phases including the phases of flight at low speed carried out at an indicated airspeed (IAS) of the rotorcraft which is below a predetermined threshold and yaw-stabilised phases of flight at high speed which are carried out at an indicated airspeed (IAS) of the rotorcraft which is greater than said predetermined threshold, and **in that** when said indicated airspeed (IAS) of the rotorcraft (1) is greater than said predetermined threshold, the regulation of the angle of deflection of said left and right flaps (45, 46) is activated if the following yaw-stabilised flight conditions are met:

    - |Ny| < 0.075 times the acceleration due to gravity,
    - |Phi| < 5 degrees,
    - IPI < 10 degrees per second,
    - no pilot is exerting force on a differential pitch control member capable of ordering a differential variation of the first and second pitches of the blades (6', 6") of the left (21) and right (22) propellers,

    where "|Ny|" represents the absolute value of the load factor of the rotorcraft in a transverse direction in the reference frame of the rotorcraft, "|Phi|" represents the absolute value of the roll angle of the rotorcraft, and "|P|" represents the absolute value of the angular rate of roll of the rotorcraft.

2.  A method according to Claim 1,
    **characterised in that**, when an indicated airspeed (IAS) of the rotorcraft is below a predetermined threshold, the main rotor (10) being driven in rotation by said power plant (5) in a first direction of rotation and generating a torque on said fuselage (2) which is opposed in particular by a propeller propelling an airflow towards the rear of said rotorcraft (1), the angle of deflection of the flap receiving said airflow which is directed towards the rear is regulated by causing said flap to effect a rotation in a second direction opposite to said first direction in order to make it attain a maximum angle of deflection relative to the associated aerodynamic surface.

**3.** A method according to Claim 2, **characterised in that**, when an indicated airspeed (IAS) of the rotorcraft (1) is below a predetermined threshold, the main rotor (10) being driven in rotation by said power plant (5) in a clockwise direction when viewed from above, the angle of deflection ($\alpha$1) of the left flap (45) is regulated by causing the left flap (45) to effect a rotation in an anticlockwise direction viewed from above in order to make it attain a maximum angle of deflection ($\alpha$1) relative to the left aerodynamic surface (40).

**4.** A method according to Claim 2, **characterised in that**, when an indicated airspeed (IAS) of the rotorcraft (1) is below a predetermined threshold, the main rotor (10) being driven in rotation by said power plant (5) in an anticlockwise direction when viewed from above, the angle of deflection ($\alpha$2) of the right flap (46) is regulated by causing the right flap (46) to effect a rotation in a clockwise direction viewed from above in order to make it attain a maximum angle of deflection ($\alpha$2) relative to the right aerodynamic surface (41).

**5.** A method according to Claim 1, **characterised in that**, the regulation of the angle of deflection ($\alpha$1, $\alpha$2) of said left (45) and right (46) flaps being activated, a first torque (Tq1) generated by the left propeller (21) as a percentage of the maximum torque and a second torque (Tq2) generated by the right propeller (22) as a percentage of the maximum torque are measured in real time, then a first difference ($\Delta$Tq) of said second torque (Tq2) minus said first torque (Tq1) is determined in real time, and:

- the deflection of said left (45) and right (46) flaps is ordered by causing them to effect a rotation in the clockwise direction when said first difference ($\Delta$Tq) is greater than +2.5 percent,
- the deflection of said left (45) and right (46) flaps is ordered by causing them to effect a rotation in the anticlockwise direction when said first difference ($\Delta$Tq) is less than -2.5 percent,
- said left (45) and right (46) flaps are held in position when said first difference ($\Delta$Tq) is between -2.5 percent and +2.5 percent.

**6.** A method according to Claim 1, **characterised in that**, the regulation of the angle of deflection ($\alpha$1, $\alpha$2) of said left (45) and right (46) flaps being activated, a first pitch ($\beta$1) of the left propeller (21) and a second pitch ($\beta$2) of the right propeller (22) are measured in real time, then a second difference ($\Delta\beta$) of said second pitch ($\beta$2) minus said first pitch ($\beta$1) is determined in real time, and:

- the deflection of said left (45) and right (46) flaps is ordered by causing them to effect a rotation in the clockwise direction when said second difference ($\Delta\beta$) is greater than 0.3 degrees,
- the deflection of said left (45) and right (46) flaps is ordered by causing them to effect a rotation in the anticlockwise direction when said second difference ($\Delta\beta$) is less than -0.3 degrees,
- said left (45) and right (46) flaps are held in position when said second difference ($\Delta\beta$) is between -0.3 degrees and +0.3 degrees.

**7.** A method according to Claim 1, **characterised in that**, the regulation of the angle of deflection ($\alpha$1, $\alpha$2) of said left (45) and right (46) flaps being activated, a first power consumed by the left propeller (21) and, on the other hand, a second power consumed by the right propeller (22) are determined in real time, then a third difference of the second power minus the first power is determined in real time, and:

- the deflection of the left and right flaps is ordered by causing them to effect a rotation in the clockwise direction when said third difference is greater than +50 kilowatts,
- the deflection of said left and right flaps is ordered by causing them to effect a rotation in the anticlockwise direction when said third difference is less than -50 kilowatts,
- said left and right flaps are held in position when said third difference is between -50 kilowatts and +50 kilowatts.

**8.** A method according to any one of the preceding claims, **characterised in that** said predetermined threshold is equal to 25.7 metres per second.

**9.** A rotorcraft (1) provided with a main lift rotor (10) and also a left propeller (21) and a right propeller (22) which are arranged on either side of a fuselage, said rotorcraft comprising a power plant capable of causing said left (21) and right (22) propellers and also said main rotor (10) to rotate, said rotorcraft (1) comprising a left aerodynamic surface (40) and a right aerodynamic surface (41) which exert transverse lift and are arranged respectively in the extension of said left (21) and right (22) propellers on a tail unit (15) in the vicinity of a rear end (AR) of said fuselage (2), said left (40) and right (41) aerodynamic surfaces comprising a left flap (45) and a right flap (46) respectively, said left (45) and right (46) flaps being capable of being deflected by a first and a second control means (61, 62) respectively in order to present an angle of deflection with the associated aerodynamic surface (40, 41).
**characterised in that** said rotorcraft (1) comprises:

- a first speed measurement means (51) for measuring the indicated airspeed (IAS) of said rotorcraft (1),
- a second speed measurement means (53) for measuring the angular rate of roll (P) of said rotorcraft (1),
- a force sensor (56) capable of determining whether a pilot is exerting a force on a differential pitch control member of the rotorcraft (1),
- an angle sensor (52) measuring the roll angle (Phi) of the rotorcraft,
- an acceleration sensor (50) measuring the load factor (Ny) of the rotorcraft in a transverse direction,
- a first and a second torque sensor (54, 55) for sensing the torques of the left (21) and right (22) propellers or a first and second measurement means for measuring the pitch (57, 58) of the left (21) and right (22) propellers, or a first and a second torque sensor (54, 55) for sensing the torques of the left (21) and right (22) propellers and a first and a second speed-of-rotation sensor ($\Omega$1, $\Omega$2) for sensing the speeds of rotation of the left (21) and right (22) propellers,
- a control means (60) capable of ordering the deflection of said left (45) and right (46) flaps using first and second speed measurement means (51, 53), force (56), angle (52) and acceleration (50) sensors, and also first and second torque sensors (54, 55) by implementing the method according to Claim 5 or first and second pitch measurement means (57, 58) by implementing the method according to Claim 6, or first and second torque sensors and first and second speed-of-rotation sensors by implementing the method according to Claim 7.

10. A rotorcraft according to Claim 9,
**characterised in that** said rotorcraft (1) is a hybrid helicopter, the speeds of rotation of the outputs of the turboshaft engine or engines (5), of the left (21) and right (22) propellers, of the main rotor (10) and of a mechanical interconnection system between said turboshaft engine (5), said propellers (21, 22) and said rotor (10), are proportional to each other, the ratio of proportionality being constant whatever the flight configuration of the hybrid helicopter in normal conditions of operation of the integrated kinematic chain.

Fig.1

Fig.2

Fig.3

Fig.4

Fig.5

Fig.6

Fig.7

Fig.9

Fig.8

Fig.10

Fig.11

## RÉFÉRENCES CITÉES DANS LA DESCRIPTION

**Documents brevets cités dans la description**

- FR 2916418
- US 4935682 A
- EP 0742141 A
- FR 2689854
- FR 2769285
- US 6478262 B
- EP 0867364 A